Europäisches Patentamt

European Patent Office

Office européen des brevets

(11) Publication number : **0 475 876 A2**

(12) # EUROPEAN PATENT APPLICATION

(21) Application number : **91600009.4**

(22) Date of filing : **12.08.91**

(51) Int. Cl.⁵ : **B01D 47/10,** B01D 51/08,
B01D 53/26, B01D 45/12

(30) Priority : **10.08.90 GR 90010605**

(43) Date of publication of application :
**18.03.92 Bulletin 92/12**

(84) Designated Contracting States :
**AT BE CH DE DK ES FR GB IT LI LU NL SE**

(71) Applicant : **Nasikas, Athanasios**
**Ethnikis Antistaseos 10**
**GR-413 35 Larissa (GR)**

(72) Inventor : **Nasikas, Athanasios**
**Ethnikis Antistaseos 10**
**GR-413 35 Larissa (GR)**

(74) Representative : **Andrikopoulou, Evagelia**
**Bousiou 31 Abelokipi**
**GR-115 26 Athens (GR)**

(54) **Method and mechanism for the supersonic separation of droplets from a gas stream.**

(57)   In the present invention separation is effected by means of a convergent-divergent nozzle, in which the divergent portion is convex. A supersonic flow of a gas-droplets mixture is introduced into the convergent-divergent nozzle and at the throat thereof a normal shock wave occurs and results to an abrupt change in the speed and direction of gas flow, which becomes subsonic and follows the geometry of the convex divergent portion. The droplets are inertially separated from the gas stream and two flow zones emerge, one zone free from droplets and one enriched with droplets, these two zones being subsequently separated by a separator plate. Henceforth, a conventional subsonic separator is used to receive the liquid formed by the separator droplets, whereas the zones of gas flow being free from droplets converge to be subsequently used in any desired manner.

EP 0 475 876 A2

FIG. 2

## THE FIELD OF THE INVENTION

The present invention is applicable as a separator for a gaseous mixture, which comprises many components, some of which may be separated when entering into a convergent-divergent nozzle where they are liquified under supersonic conditions and by means of the merchanism of the present invention they are separated from the remaining gaseous components. In this way it is possible to separate the various components in natural gas, or the coal tar present, under steam condition, within the flue gases discharged from the coal burning power stations, or to convert a saturated mixture e.g.of air and water vapour into an unsaturated one, for drying purposes.

## THE PRIOR ART

A great number of inventions is associated with the art of the general separation of a gas stream from liquid or solid particles. Herein below are listed patents, already issued pertinent to this field of the art:

1. U.S. patent No. 2,474,695 of Schneidel et al (1949)
2. U.S. patent No. 3,509,932 of Chambers (1970)
3. U.S. patent No. 3,528,216 of Garrett (1970)
4. U.S. patent No. 3,528,217 of Garrett (1970)
5. U.S. patent No. 3,528,222 of Garrett (1970)
6. U.S. patent No. 3,559,373 of Garrett (1971)
7. U.S. patent No. 3,894,851 of Gorman (1975)
8. U.S. patent No. 4,378,976 of Rush (1983)
9. U.S. patent No. 4,448,135 of Doughan et al (1984)
10. U.S.S.R patent No. 593,717 (1978)
11. Japanese patent No. 55-79022 of Kokai (1980)
12. U.S.S.R patent No. 1,228,881 (1986)
13. U.S. patent No. 4,111,671 of Williamson (1978)
14. U.S. patent No. 4,292,050 of Linhard et al (1981)

From the above cited patents it is only the U.S. patents of Garrett Nos.3,528,216, 3,528,217, 3,528,221, 3,559,373 and the U.S.patent No.4,292,050 of Linhard et al, which refer to a supersonic separator. Given that the principle of operation of the present invention is based upon provision of supersonic conditions, it is obvious that the remaining of the above cited patents are in no way comparable with the present invention.

Further, in relation to Garrett's abovementioned patents, it is noted that the principle of operation is entirely different. Garrett's patents are based upon the centrifugal separation of droplets and to their discharge via a permeable wall. In the contrary, the present invention is based upon separation by means of a normal shock wave, downstream of which the droplets because of their inertia have a speed relatively higher than the remaining flow. Upstream the normal shock wave, the gas and droplets flow at approximately the same speed.In the contrary, immediately downstream the shock wave, the speed of the gas flow is abruptly reduced, whereas the droplets maintain the speed they had upstream the shock wave. This, initially intense, speed difference, is the main cause of facilitating contrifugation of droplets in the downstream convex divergent portion of the nozzle and their eventual separation by means of a separator plate.

In the above cited patent of Linhard et al, separation is effected by means of an oblique shock wave and not a normal shock wave, as is the case in the present patent application. The droplets in Linhard's patent are separated by means of a change in the direction of flow of the gas stream at the region of the oblique shock wave in relation to the flow of the droplets and by means of a subsequent centrifugal separation by means of a curved portion, whereas in the proposed invention separation is effected by means of changing the speed of the droplets in relation to the remaining flow, through a normal shock wave and by means of subsequent centrifugation within a convex divergent nozzle with a separator plate.

A table is provided below, wherein the proposed supersonic separator is compared to the cited prior art patents of Garrett and Linhard with reference to some of the most important differentiating characteristics of devices in this field of the art.

TABLE 1
CHARACTERISTICS OF SUPERSONIC SEPARATORS

| CHARACTERISTIC | PRESENT INVENTION | GARRETT'S PATENTS | LINHARD ET AL US PATENT 4,292,050 |
|---|---|---|---|
| 1. Separation upstream the wave | | + | |
| 2. Separation downstream the wave | + | | + |
| 3. Separation with a normal shock wave | + | | |
| 4. Separation with an oblique shock wave | | | + |
| 5. Separation into a curved portion downstream the shock | | | + |
| 6. Separation into a divergent nozzle with separator plate downstream the shock | + | | |
| 7. Separation upstream the shock by means of a permeable wall and centrifugal curve | | + | |
| 8. Fog formation of the element to to be separated | In all patents, it is effected within a Laval nozzle in accordance to the technique known since 1930, which is described in the book entitled: "Two phase steam flow in turbines and separators" (ed.M.J.Moore and C.H. Sieverding p.p. 557-558) | | |
| 9. Separation of droplets of a very small diameter due to the action of intense separation forces. | + | | + |
| 10. Employment of other auxiliary seperation elements (electric field) | | + | |
| 11. Capacity of operating at a broad range of Mach numbers, important with the broadness in the field of applications. | + | + | Unable to work in all Mach numbers, because of the phenomena of separation of flow downstream the wave and formation of intense whirlings, (Shapiro A.H.-1953. The dynamics and thermodynamics of compressible fluid flow. Vol 1, p.p. 557-558) |

From the above table, it is evident that the present invention is substantially different from the cited patents of the prior art, both with regard to its principles of operation, as well as with regard to its merits, particularly relating to the broad variety of applications.

## BRIEF DESCRIPTION OF THE DRAWINGS

In accordance to internationally accepted standards of aerodynamics, the terms used herein are defined as follows:

"Supersonic effuser" means a flow channel having a convergent subsonic portion uspstream of a divergent supersonic portion,whereas in between them there is provided a sonic throat.The supersonic effuser functions as an aerodynamic expander.

"Supersonic diffuser"means a flow channel having a convergent subsonic portion, where a shock wave develops close to the throast thereof. The supersonic diffuser functions as an aerodynamic compressor.

"Shock Wave" means a discontinuity in the flow which changes from supersonic to subsonic.

"Throat" means the border between convergence and divergence in an effuser or diffuser.

The object and merits of the present invention will become apparent by reference to the following drawings:

Fig.1, which shows a general separator arrangement.

Fig.2 shows a view taken along lines A-A of Fig.1 and substantially illustrates the present invention.

Fig.3 shows a view taken along lines A1-A1 of Fig.2.

Fig.4 shows a view taken along lines B1-B1 of Fig.2.

Fig.5 shows a view of a supersonic separator wherein parallel nozzles are formed by means of intermediate blading.

Fig.6 shows a view taken along lines A2-A2 of Fig.5.

Fig.7 shows a view taken along lines B2-B2 of Fig.5.

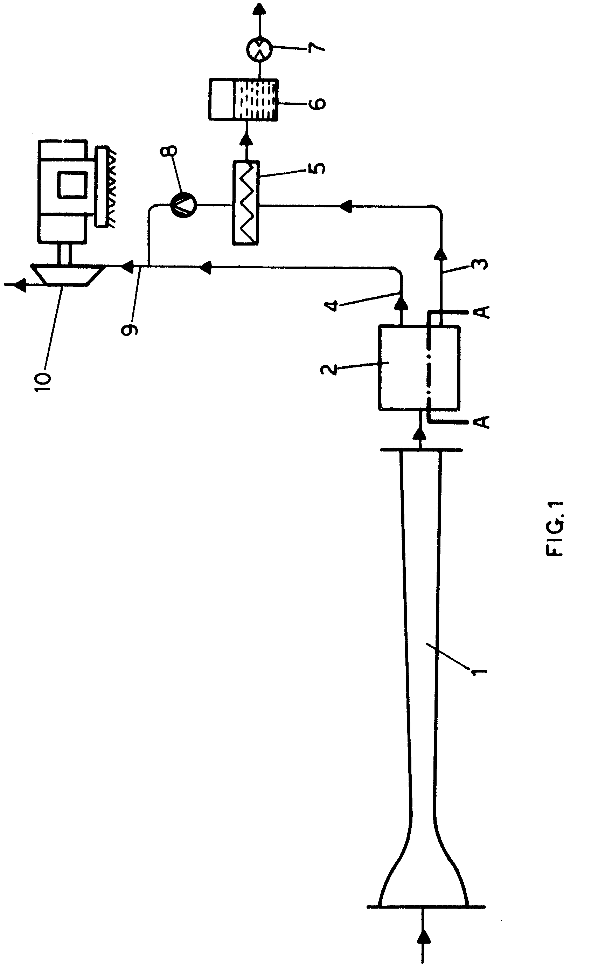

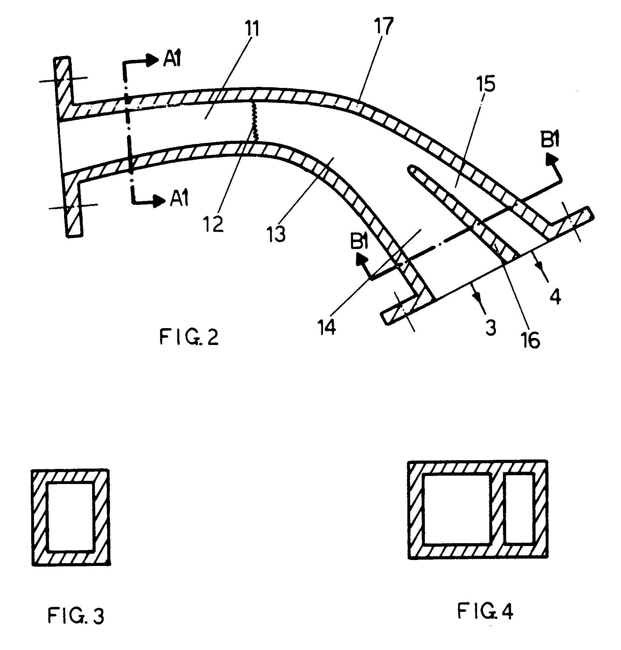

The present invention relates to a method and mechanism as presented by box 2 of Fig.1 and shown in detail in Figures 2,3 and 4.Fig.1,illustrating a general arrangement for a separator, is merely provided in order to facilitate understanding of the mechanism. This however does not confine usage of this mechanism, which can be used in various other arrangements with a problem of separating a gas stream from condensed droplets.

The supersonic effuser 1 is connected to the supersonic separator 2, which is used in separating a gas stream from condensed droplets and this is subsequently connected to the subsonic separator 5 via duct 3 and to the fan outlet 8 via duct 4. Finally, duct 9 upstream the convegence of duct 4 and the fan outlet 8 is connected to the compressor 10. Separator 5 is also connected to the liquid tank 6, which is subsequently connected to a pump 7. Separator 5 is also connected to the fan 8. The herein abovementioned elements depicted by numerals 1,3,4,5,6,7,8,9, and 10 are well known in the prior art and in no way constitute part of the claimed matter for the present invention.

Figure 2 shows a cross sectional view of a first preferred embodiment of the present invention. The convergent portion 11 of the diffuser of the supersonic separator 2 is connected to the effuser 1.Both the supersonic separator 2 and the effuser 1 are of a rectangular section of a uniform width.Sectional change is,as depicted in Fig.2, made only along the other side of the rectangular section.Downstream throat 12,supersonic separator 2 comprises a convex divergent nozzle 13,which is further downstream divided in two partial divergent nozzles 14 and 15 by means of the separator plate 16.

The abovementioned elements employed in the arrangement of the present invention are well known in the prior art.Adequate information on these elements can be found in the following publications:

   With regard to elements 11,12,13:
– Beckwarth J.E.and Moore J.A.(1955).
"An accurate and rapid method for the design of supersonic nozzles" NASA space TN.3322.
– Shapiro A.H.(1953) "The dynamics and thermodynamics of compressible fluid flow", Vol.1, II-John Wiley and Sons NY.

With regard to the positioning of plate 16 and the calculation of the streamlines followed by the droplets being separated,adequate information may be obtained from the following publication:
– Friedlander S.(1977)
"Smoke dust and Mase"-John Wiley And Sons N.Y;

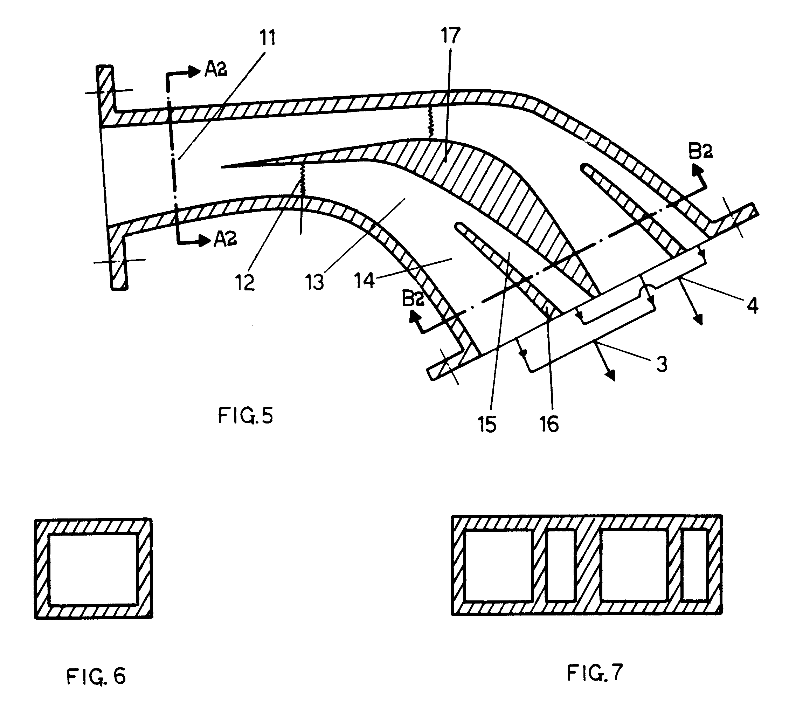

Fig.5 shows another preferred ombodiment of the invention wherein parallel nozzles are created by the dividing blading 17. In this case also,the references provided are adequate for the determination of the various elements.

## DETAILED DESCRIPTION OF PREFERRED EMBODIMENTS

By reference to the accompanying drawings,we will herein below describe an illustrative,preferred embodiment of the invention.

As mentioned in the above,the present invention proposes a method and a mechanism for the supersonic separation of a gas stream from droplets,this method comprising formation of a powerful normal shock wave ,the change of direction in the flow downstream the normal shock wave and the inertial separation of the droplets.

A flow of gas-droplets mixture enters through the inlet 11 of the generally rectangular,as illustratively shown in Fig.2,convergent - divergent nozzle of the supersonic separator of the invention.The flow subsequently converges within space 11 up to the throat 12.A normal shock wave is created at the region of throat 12,i.e.the conditions of flow are regulated so as to cause the creation of a normal shock wave in this region.The creation of the normal shock wave in this region is verified by the following occurences:

– The flow abruptly changes from supersonic to subsonic.
– There is an abrupt change in pressure,i.e. a pressure recovery takes place which is not accompanied by a significant rise in entropy when the Mach number downstream the wave is of the order of 1.2.-1.5.
– The droplets downstream the wave have a relatively high speed as compared to the speed in the remaining flow.

The flow changes direction downstream the normal shock wave through the curved divergent nozzle,whereas the droplets do not,because of inertia,follow this change,but continue flowing along the streamlines where they previously moved.Two zones are thereby created downstream the normal shock waveK.A first zone comprising a dry medium and a second zone comprising a medium enriched with droplets.The second zone is eventually separated from the first by means of the separator plate 16.Thus, recovery of the two separated flows takes place within the divergent nozzles of the dry medium 14 and the droplet enriched medium 15,the two separated flows subsequently reaching the outlet ducts 3 and 4 of the proposed separator.An increase in the flow pressure and temperature starts within space 11,this increase becoming abrupt at the region where the normal shock wave occurs.Thus, in the course of the flow from the inlet region 11 to the separator plate 16,the droplets undergo re-evaportation,this phenomenon indicating that this course must be as short as possible so as to minimize occurence of these phenomena.

A wider throat 12 would result to a larger course of the droplets from the inlet region 1 to the separator plate 16 because of geometrical analogy. Thus, in order to manufacture separators suitable for large flow rates, the abovementioned lenght of course, as well as the dimensions of throat 12 are kept at low levels by means of a suitable desired plurality of parallel bladings 17, which allow for the creation of more than a single flow passages.

The course from the inlet region 11 to the separator plate 16 also becomes larger, the smaller the convexity of the divergent nozzle 13. This dictates making nozzle 13 with the largest possible inward convexity, as long as the aerodynamic function of divergent flow is not disturbed, the objective being to minimize re-evaporation phenomena as well as to confine the droplets enriched zone at the least possible space.

Because of the rise in pressure, a certain evaporation of droplets continues taking place within space 15. However, this evaporation stops after a certain point because this flow although comprising a fraction of the overall flow, still contains the whole of the droplets. Thus, it is expected that re-evaporation is confined merely to so many droplets as corresponding to saturation of this fraction of flow. By way of example, if the separator plate 16 divides the flou in a manner such that the flow in space 15 is 1/4th of the overall flow, the approximate amount of droplets expected to re-evaporate is 1/4th of the droplets available in the flow prior to the separator. The remaining droplets will be maintained in the liquid phase, since they are in a saturated environment.

The abovementioned reference to re-evaporation refers to those cases where droplets tend to re-evaporate, such as in the applications of drying or of the separation of natural gas. Applications of the present invention are however not confined in the above and the invention may also be applicable in any other cases where re-evaporation phenomena are not present.

The droplet enriched zone is connected via duct 3 to the classical type of subsonic separator 5, wherein the liquid obtained by the droplets is recovered and supplied to the tank 6, wherefrom it is pumped through pump 7 and supplied at a desired space or discharged. Following separator 5, the first zone being free from droplets is led via fan 8 to converge with the second zone in the common flow channel 9, wherefrom by means of compressor 10 it is led to the desired space, e.g. for disposal to the surroundings.

Employment of compressor 10 is necessary to cover for all kinds of losses.

It must be noted that in the case of sonic flow at throat 12, the droplets display a high inertia and therefore cannot follow the fall in the speed of the flow. Thus, the basic separation factor in this case too is the initial inertia of the droplets. It is also worth noting that the cross sectional area of throat 12 may vary by means of a mechanical or a hydraulic mechanism, so as to adjust for the shock wave to take place oxactly at the throat, thereby resulting to the least possible rise in entropy and to the highest possible efficiency.

The supersonic separator of the present invention may function either independently as described herein above or supplemented by another separator. The principle of separation by means of a normal shock wave can be applied for a supplementary separation in Garett's patents or for a supplementary separator in a generally supersonic separator of the centrifugal type. In centrifugal separators supplementary separation is generally necessary, because the centrifugal forces are not usually adequate when droplets of a small diameter are involved.

Already, substantial advantages of the present supersonic separator against separators of the prior art have been summarized in the comparison Table 1.

Herein below, reference is made to illustrative sizes used in this invention:

1. Mach number at the entrance to the supersonic separator is of the order of 1.2-2.

2. Crows sectional area of the throat 12 is of the order of 0.5-3 sq.cm.

3. The ratio of cross sectional areas obtained by the separator plate is of the order of 0.1-0.3.

4. Length of the supersonic separator is preferably of the order of 5-50 cm.

It must hereby be noted that description of the present invention was herein made by reference to illustrative but not confining examples. Thus any change or amendment relating to the shape, sizes, dimensions, materials and accessories used, as long as they do not comprise a new inventive step and do not contribute towards technical innovation in the state of the art, are considered to be part of the scope and aims of the present invention.

## Claims

1. A method for the supersonic separation of droplets from a gas stream in a gas-droplets mixture within a convergent-divergent nozzle and creation of a first flow zone for the dry gas medium and a second flow zone for the droplet enriched medium, comprising the steps of:

   – creation of a normal shock wave close to the throat of said convergent-divergent nozzle, whereof a speed difference results between droplets to be separated and remaining flow;

   – change in the flow direction downstream said normal shock wave by means of suitable geometry of said convergent-divergent nozzle and the inertial separation of said droplets from said remaining flow.

2. The method for the supersonic separation of droplets from a gas stream in accordance to the above claim 1, further comprising the step of passing said gas-droplets mixture through a plurality of convergent-divergent nozzles wherein flow is subdivided into a plurality of subflows via flow passages with desired geometrical characteristics rendering minimisation of re-evaporation phenomena in the course of separation.

3. The method for the supersonic separation of droplets from a gas stream in accordance to the above claim 2, in which said plurality of convergent-divergent nozzles wherein fow is subdivided into a plurality of subflows via a plurality of flow passages is implemented by means of an arrangement of specially formed parallel bladings, each one of said bladings having a wall with the largest possible inward convexity, allowed by the aerodynamic functioning of divergent flow, and rendering a reduction of length of separation and of associated re-evaporation phenomena and a confining of said second flow zone for the droplet enriched medium in the smallest possible space.

4. A supersonic separator of droplets from a gas stream, comprising a convergent-divergent nozzle within which flow is separated into a first flow zone for the dry gas medium and a second flow zone for the droplet enriched medium, a normal shock wave being created at the region of throat of said convergent-divergent nozzle, the direction of flow being changed due to convexity of said convergent-divergent nozzle downstream said normal shock wave, the two said flow zones being separated from a point downstream said normal shock wave up to their outlet from said convergent-divergent nozzle by means of a separator plate of suitable aerodynamic form.

5. The supersonic separator of droplets from a gas stream in accordance to the above claim 4, in which downstream said normal shock wave and within the divergent nozzles defined by said separator plate on either side thereof, the two flow zones exhibit a recovery in pressure and reach at low flow speeds, thereby allowing for the droplets of said droplet enriched flow zone to be subsequently separated within a conventional subsonic separator.

6. The supersonic separator of droplets from a gas stream of the above claim 4, comprising an arrangement of specially formed parallel bladings defining a plurality of passages by means of which the flow is subdivided into a plurality of subflows, each one of said arrangement of parralel bladings having a wall with the largest possible inward convexity, allowed by the aerodynamic functioning of divergent flow, separator plates of suitable aerodynamic form being provided downstream said normal shock wave in between said parallel bladings, said separator plates effecting separation of flow into distinct zones of the dry gas medium and the droplet enriched medium.

7. The supersonic separator of droplets from a gas stream in accordance to the above claim 6, in which downstream said normal shock wave and within the divergent nozzles defined by said separator plates on either side thereof, the two flow zones exhibit a recovery in pressure and reach at low flow speeds, thereby allowing for the droplets of said droplet enriched flow zones to be subsequently separated within a conventional subsonic separator.

FIG. 1

EP 0 475 876 A2

FIG. 2

FIG. 3

FIG. 4

FIG. 5

FIG. 6

FIG. 7